# EUROPÄISCHE PATENTSCHRIFT

(11) **EP 1 083 402 B1**
(45) Veröffentlichungstag und Bekanntmachung des Hinweises auf die Patenterteilung: **09.07.2003**
(21) Anmeldenummer: 00119750.8
(22) Anmeldetag: 11.09.2000
(51) Int. Cl.: G01B 11/27

(54) **Vorrichtung zur Bestimmung der Achslage von Hohlzylindern**
Apparatus for measuring the position of the axis of a hollow cylinder
Dispositif pour mésurer la position de l'axe d'un cylindre creux

(30) Priorität: 10.09.1999 DE 19943502
(43) Veröffentlichungstag der Anmeldung: 14.03.2001
(73) Patentinhaber: Prüftechnik Dieter Busch AG, 85737 Ismaning (DE)
(72) Erfinder: Holstein, Ole, 25524 Breitenberg (DE)

(56) Entgegenhaltungen:
- WO-A-85/02253
- US-A- 4 566 202
- US-A- 5 461 793
- PATENT ABSTRACTS OF JAPAN vol. 1998, no. 05, 30. April 1998 (1998-04-30) & JP 10 009842 A (AGENCY OF IND SCIENCE &TECHNOL; NIPPON KAGAKU ENG KK), 16. Januar 1998 (1998-01-16)

## Beschreibung

Die Erfindung betrifft eine Vorrichtung zur Bestimmung der Achslage von Hohlzylindern. Die Ermittlung und Definition von Hohlzylinderachsen stellt ein gewisses Problem dar, da die zu vermessenden Hohlzylinder nur angennähert Idealform aufweisen. Je nach Produkt und Produktqualität ist der Querschnitt von Hohlzylindern über die Achslänge nur angenähert kreisförmig und somit von variablem Radius. Immerhin ist es möglich, einen Mittelpunkt für einen vorgegebenen Querschnitt zu errechen, nach einer vorzugebenden Rechenmethode, zum Beispiel einer Schwerpunktsermittlung über die Querschnittsfläche. Die Mittelpunkte werden entlang der Achse eines Hohlzylinders durch eine Linie verbunden, welche jedoch nur im Idealfall exakt gerade ist. Für Präzisionsanwendungen ist in der Praxis mit einer im Raum gekrümmten Verbindungslinie zu rechnen. Oft ist es wünschenswert, eine mittlere Achse von Hohlzylindern nicht nur innerhalb oder an den Enden desselben zu bestimmen, sondern auch über dessen Enden hinaus zu extrapolieren, um in genauer Weise anschliessende Maschinenteile positionieren zu können. Dies wird insbesondere dann gewünscht, wenn Anforderungen nach einer Norm zu erfüllen sind, wie zum Beispiel der Norm DIN/ISO 9000. Die genannten Präzsisonsanwendungen können zum Beispiel sein: Präzisionsverrohrungen in der chemischen Industrie oder in Atomkraftwerken, Wellenummantelungen im Schiffbau, oder die Herstellung von Geschützrohren usw.

Aus US-A-4 566 202 und WO 85/02253 ist bekannt, die lage der Achse zylindrischer Körper durch Rotation eines laserkopfes und Projektion des laserstrahls auf ein Target zu bestimmen.
Die Aufgabe, eine Messvorrichtung zu schaffen, die die Achslage eines Hohlzylinders auch in einiger Entfernung zu registrieren gestattet, wird mit den Merkmalen gelöst, die im unabhängigen Anspruch 1 angegeben sind.
Die Erfindung beruht darauf, dass Ungenauigkeiten der Strahllage eines Laserstrahls relativ zu dessen Gehäuse nicht als unerwünschter Fehler angesehen werden, sondern im Gegenteil als Grundlage des erfindungsgemässen Messverfahrens herangezogen werden. Die Strahllage eines Lasers, zum Beispiel eines Halbleiterlasers, ist typischerweise nur mit Aufwand exakt symmetrisch zu dessen Gehäusedimensionen einstellbar. Normalerweise ist mit einem Lateralversatz (z.B. Radialversatz) und einem Winkelversatz bezüglich einer Gehäuse-Symmetrieachse zu rechnen. Auf diese Weise ergibt sich, dass die Lage eines Laserstrahls typischerweise windschief zu einer Idealachse steht.
Die Erfindung geht von der Erkenntnis aus, dass bei Verdrehung einer solchen windschief gerichteten Achse um eine Idealachse die Oberfläche eines Hyperboloides definiert wird. Eine senkrecht zur Idealachse gelegte Target-Ebene wird daher in exakt kreisförmiger Weise durch die aufgespannte Hyperboloid-Oberfläche geschnitten. Gemäss der Erfindung wird vorgesehen, eine geeignete Vorrichtung bereitzustellen, mit der ein zufällig oder absichtlich windschief eingestellter Laserstrahl, relativ zu einer Idealachse eines Hohlzylindersund innerhalb des Hohlzylinders, gedreht werden kann. In einiger Entfernung ausserhalb des Hohlzylinders können auf diese Weise durch den Laserstrahl auf einer Targetfläche kreisförmige Linien erzeugt werden, welche je nach Abstand des Targets vom Hohlzylinder unterschiedlichen Durchmesser aufweisen. Die Grösse solcher Durchmesser hängt dann auch davon ab, in welchem Ausmasse ein windschiefer Versatz der Laserstrahlachse von einer Idealachse des zu vermessenen Hohlzylinders vorliegt. Um eine geeignete Vorrichtung bereitzustellen, mit der die erforderliche Drehung, ggf. die Einstellung unterschiedlicher Windschiefe-Werte des Laserstrahls durchgeführt werden kann, sieht die Erfindung Rollen vor, welche auf dem Innenmantel eines zu vermessenden Hohlzylinders abrollen können und zum Zwecke einer präzisen Auflage mit einer Spannvorrichtung an dessen Innendurchmesser anlegbar sind. Vorzugsweise ist die Spannvorrichtung ähnlich den Gelenken eines Regenschirmes ausgebildet, kann aber auch durch Spannkonusse oder vergleichbare Konstruktionen realisiert werden. Gemäss der Erfindung werden mit Vorteil zwei Spannvorrichtungen vorgesehen, welche unabhängig voneinander justiert werden können und ansonsten konstruktiv annähernd gleich oder austauschbar sind. Zur Erzeugung eines Lichtstrahles, speziell eines Laserlichtstrahls wird mit Vorteil ein batteriebetriebener Halbleiterlaser verwendet. Die Drehung der Laserlichtquelle kann per Hand oder motorisch erfolgen. Für den motorischen Antrieb kann neben Elektrizität auch Druckluft vorgesehen sein, z.B. auch in Form eines langsamlaufenden Turbinenmotors. Als besonders preiswertes Target stehen handelsübliche Luftgewehr-Schiesscheiben zur Verfügung, welche jeweils einmal verwendet werden und das Anreissen einer Idealposition mit einem Kömer oder dgl. an einer Referenzfläche erleichtern. Für präzisere Messungen kann vorgesehen werden, die Mittelpunktslage eines vom Laserstrahl projizierten Kreisringes mit optoelektronischen Mitteln zu bestimmen, zum Beispiel unter Verwendung eines sog. CCD-Sensors in Zusammenspiel mit einem Computer.

Die Erfindung wird im einzelnen anhand der Zeichnungen erklärt. Es zeigt
- Fig. 1: die Erzeugung eines einschaligen Hyperboloids durch eine zugehörige Geradenschar
- Fig. 2: die Erzeugung einer Hyperboloid-Oberfläche durch einen Laserstrahl, welcher um eine Referenzachse gedreht wird, sowie die kreisrunde Begrenzung einer zugehörigen Schnittfläche
- Fig. 3: die schematische Anordnung eines ersten Spannvorrichtungs-Stückes in einem Hohlzylinder
- Fig. 4: die Aufsicht auf ein Spannvorrichtungs-Stück in Richtung der Achse eines Hohlzylinders
- Fig. 5: konstruktive Einzelheiten für das erste Spannvorrichtungs-Stück, mit welchem die Vorrichtung um eine Achse gedreht wird
- Fig. 6: konstruktive Einzelheiten für ein zweites Spannvorrichtungs-Stück, welches gedreht wird und eine Laserlichtquelle enthält
- Fig. 7: ein mit Kreisringen bedrucktes Target zur Ermittlung des Kreiszentrums
- Fig. 8: eine schematische Darstellung eines mit einem zweidimensional wirkenden CMOS-Sensors bestückten Targets, wobei der Sensor in Verbindung mit einem tragbaren Computer steht
- Fig. 9: eine querschnittsmässige ansicht für eine zusammengesetzte Anordnung gemäß Fig. 5 und 6.

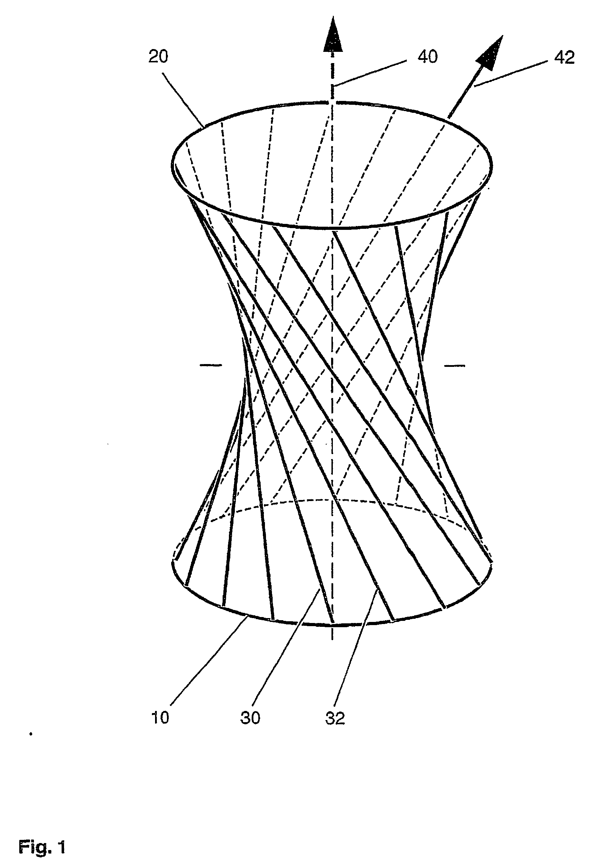

Wie in Fig. 1 gezeigt, kann in an sich bekannter Weise eine Hyperboloid-Oberfläche dadurch dargestellt werden, dass eine windschief angeordnete Gerade 30, 32 um eine Referenzgerade 40 rotiert wird. Wie durch Pfeil 42 angedeutet, spannt sich das Hyperboloid unbegrenzt aus. Senkrecht zur Referenzgeraden, welche eine Symmetrieachse definiert, erzeugt eine um die Referenzgerade rotierte Gerade auf entsprechenden Schnittflächen exakte Kreisringe (z.B. 10, 20).

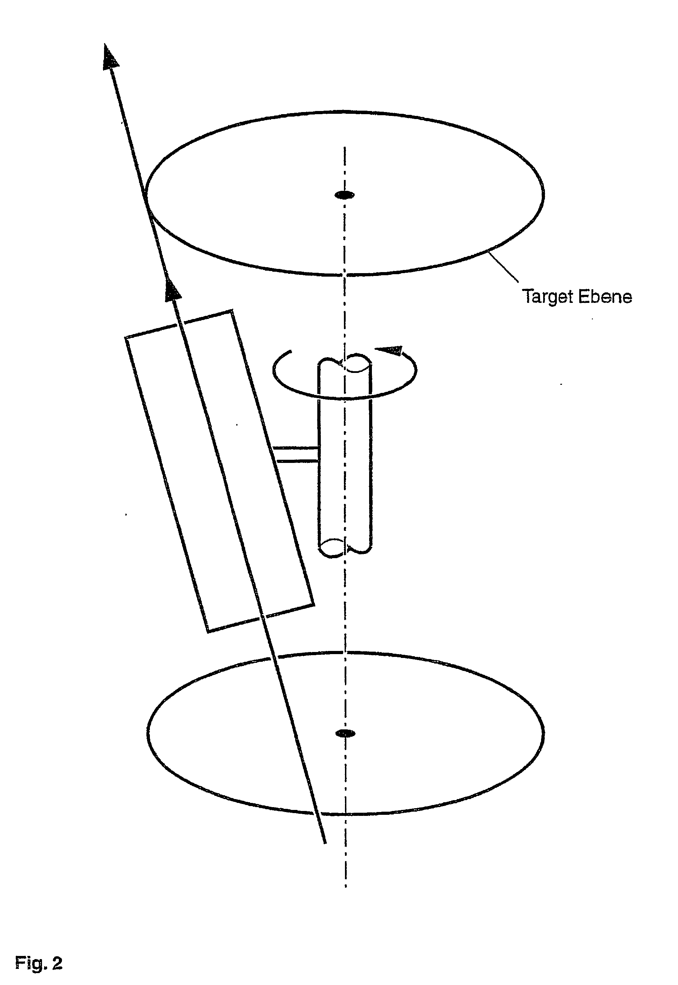

Die Erfindung geht von der Erkenntnis aus, dass ein um eine Referenzachse gedrehter Laserstrahl keinen exakten Konus definiert, sondern eine Hyperboloid-Oberfläche. Die Parameter einer solchen Oberfläche können dadurch variiert werden, dass der Laserstrahl einen unterschiedlichen Abstand von der Referenzachse erhält, oder sein Winkel bezüglich einer Referenzachse unterschiedlich eingestellt wird. Die Projektion eines derart eingestellten Laserstrahls auf eine entfernt angeordnete Targetfläche wird also typischerweise Kreise ergeben, wenn die Targetfläche senkrecht zur Referenzachse orientiert ist. Die entsprechenden Verhältnisse werden in Fig. 2 gezeigt.

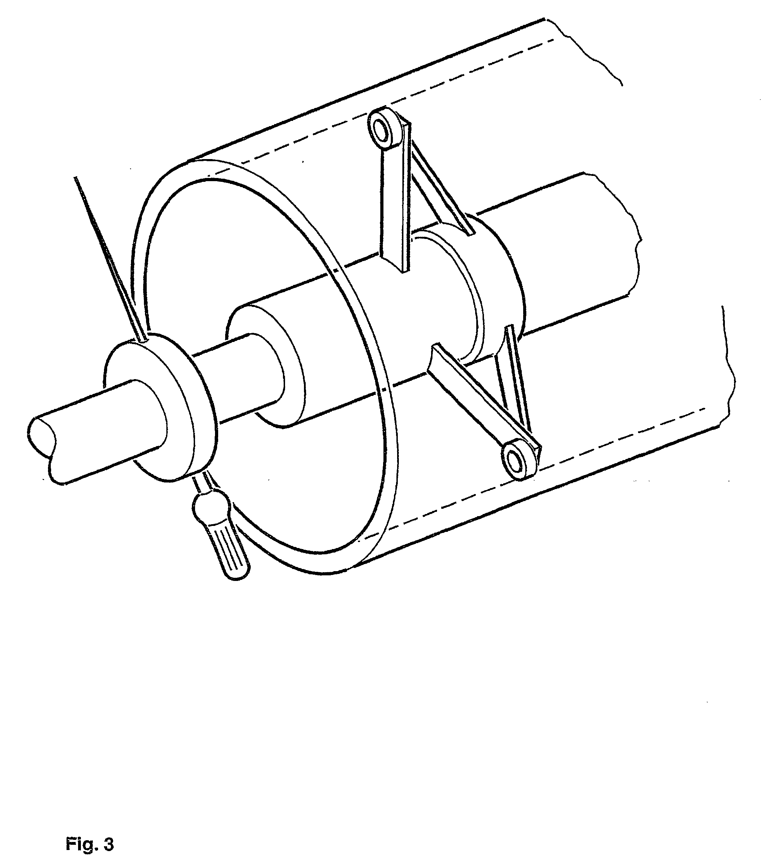

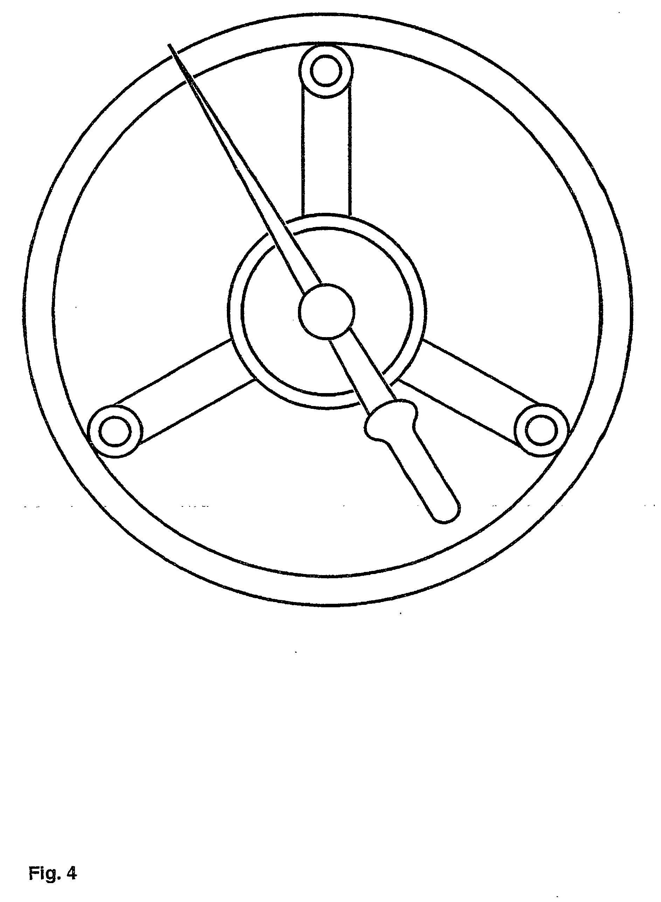

In Fig. 3 und Fig.4 wird in Teilansicht eine Lösung gezeigt, mit der eine präzise Drehung einer Laserlichtquelle um die sog. "Seele", d.h. Symmetrieachse eines Hohlzylinders gedreht werden kann. Die erfindungsgemässe Vorrichtung sieht vor, ein zentral im Hohlzylinder anzuordnendes und dort zu drehendes Rohrstück mit einer rotierfähigen Spannvorrichtung zu versehen und mit dieser zu lagern. Die Spannvorrichtung weist mehrfache Gelenke auf, wie etwa von der Konstruktion eines (Sonnen-) Schirmes bekannt. An der Peripherie der Gelenkarme sind Präzisions-Rollen angebracht, welche auf der Innenwand des Hohlzylinders abrollen können. Die Ausführungsform der Rollen ist an sich beliebig, jedoch eignen sich in besonderer Weise Rillenkugellager.
Die in Fig. 3 gezeigte Spannvorrichtung wird ergänzt durch eine zweite gleicher Art, durch welche das zentral angeordnete Rohrstück an seinem anderen Ende zentrier- und drehbar gemacht wird. Das zentrale Rohrstück weist eine Länge von etwa 5% bis 90% des Hohlzylinders auf, zum Beispiel ca. 5 m Länge bei einem Hohlzylinder von 20 m Länge. Wegen der drehbaren Lagerung kann das zentrale Rohrstück im Hohlzylinder also auch vorsichtig in dessen Längsrichtung hin- und hergefahren werden. Hierzu wird ein Verlängerungsrohr vorgesehen (in Fig. 3 ansatzweise gezeigt), mit der das zentrale Rohrstück nicht nur gedreht, sondern insbesondere auch verschoben werden kann. Die Orientierung des Verlängerungsrohres ist völlig unkritisch, es kann auch eine stabile Schraubenfeder oder ein Plastikschlauch für den genannten Zweck vorgesehen werden, falls ein verrundeter Hohlzylinderabschnitt vermessen werden soll. Das Verlängerungsrohr kann mit einem Handgriff wie gezeigt versehen sein, so dass die erforderliche Drehbewegung ausführbar ist. Anstelle des Handgriffs wird vorzugsweise ein nicht gezeigter motorischer Antrieb verwendet, mit welchem z.B. das Verlängerungsrohr und somit das zentrale Rohrstück in Drehung versetzt werden kann. Wie in Fig. 4 gezeigt, ist zur definierten Einstellung der Drehlage des zentralen Rohrstückes ein Messzeiger vorgesehen, welcher jedoch bei motorischem Antrieb kleiner gehalten wird oder entfallen kann.

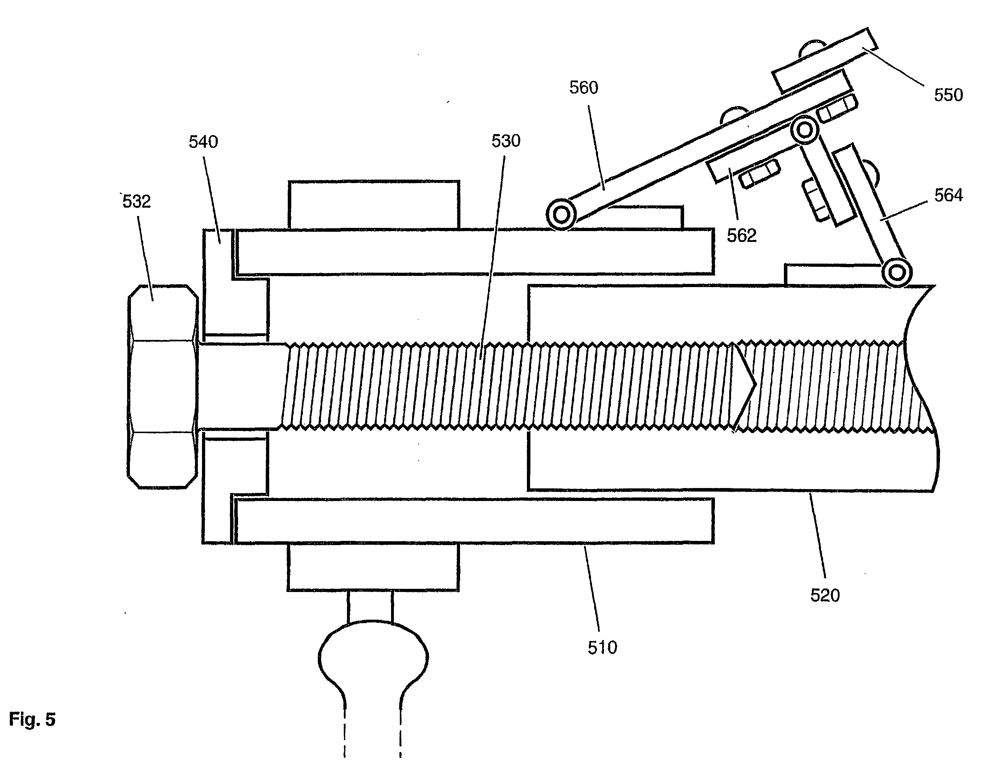

Details zum Anpassen der ersten Spannvorrichtung 500 an den Durchmesser des zu vermessenden Hohlzylinders werden in Fig. 5 gezeigt. Es ist ersichtlich, dass das entsprechende Ende des zentralen Rohrstückes aus zwei gegeneinander verschiebbaren Rohren 510, 520 besteht, von denen das Rohr 520 nur anteilig gezeigt ist und welches erhebliche Länge aufweisen kann. Dies ist mit einem Innengewinde versehen, in welches eine Spannschraube 530 eingreift, die am Schraubenkopf 532 betätigt werden kann. Dieser liegt auf einem Widerlager 540 auf. An Rohr 510 wird genannter Handgriff oder Verlängerungsvorrichtung angebracht. Bei Betätigung der Spannschraube 530 verkürzt oder verlängert sich der Abstand der Scharniere 560, 564, welche mittels Scharnier 562 verbunden sind, so dass Kugellager 550 radial von der Drehachse entfernt wird oder z.B. mit einer nicht gezeigten Rückholfeder zurückgezogen werden kann. Es versteht sich, dass die Betätigung der Spannschraube drehmomentbegrenzt, am besten per Hand, zu erfolgen hat, um eine Beschädigung der Messvorrichtung oder des Hohlzylinders zu vermeiden. - Die weiteren vorgesehenen Rollen und Scharniere (insgesamt mindestens drei pro Spannvorrichtung) sind aus Gründen der Übersichtlichkeit nicht gezeigt.

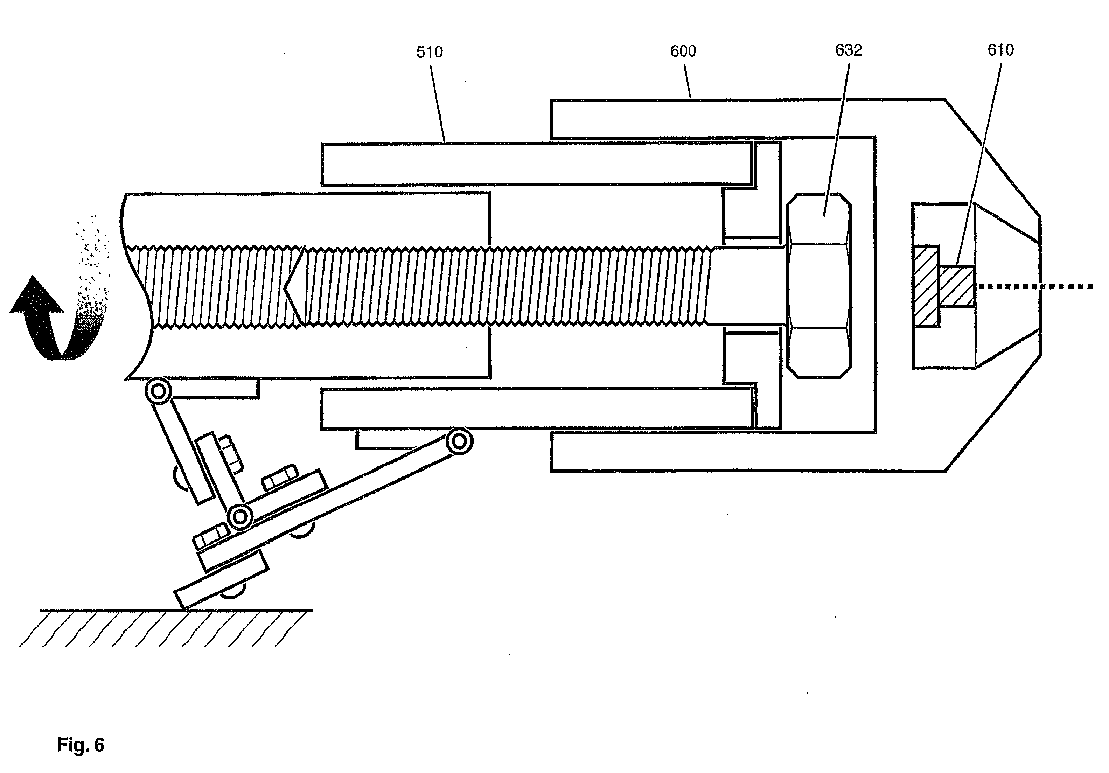

In Fig. 6 wird der restliche Teil der Mechanik gezeigt. Die zweite Spannvorrichtung ist im wesentlichen vergleichbar mit der ersten. Es besteht aber der Unterschied, dass anstelle eines Drehgriffes oder einer Verlängerungseinrichtung ein Laserstrahlkopf 600 auf das Rohr 510 aufspannbar ist, z.B. durch Aufschrauben oder einfach nur durch Aufstecken. Dies wird jedoch erst dann vorgenommen, wenn durch Betätigung der Spannschraube 632 die zweite Spannvorrichtung an den Innendurchmesser des zu vermessenden Hohlzylinders eingestellt worden ist. Laserstrahlkopf 600 enthält einen Dioden-Laser samt batteriebetriebener Stromversorgung und Schalter zum Ein- und Ausschalten. Der Dioden-Laser strahlt in etwa in Richtung der Drehachse und kann ggf. gezielt radial zu dieser und/oder schräg zu dieser eingestellt werden.

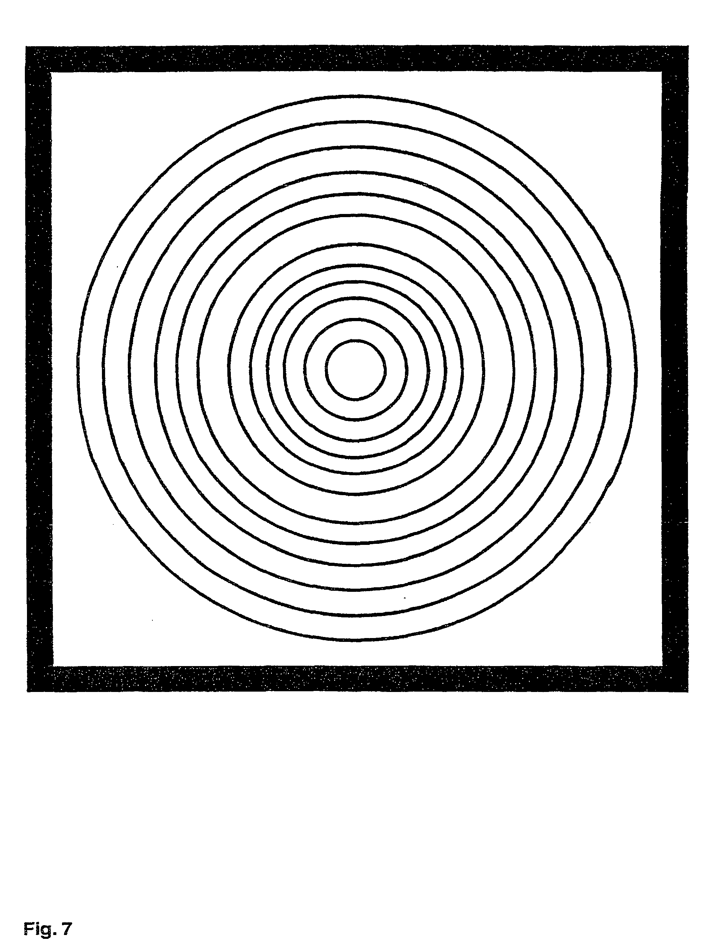

Nach Einführen des Laserstrahlkopfes in den Hohlzylinder kann danach der restliche Teil des Messanordnung in den Hohlzylinder eingebracht werden, ggf. unter Durchmesser-Anpasssung des hinteren Spannstückes an den Hohlzylinder. Nach Abschluss dieser Vorarbeiten wird die gesamte Messanordnung unter einer axialen Verschiebung in Richtung der Hohlzylinderachse in Drehung versetzt. Dabei wird ein entfernt an einer Referenzfläche angebrachtes Target (Fig. 7) auf dieser so lange verschoben, bis sein Druckmuster konzentrisch zu den Kreisen bzw. Kreisbögen liegt, welche bei Drehung des Laserkopfes bzw. Zwischenstücks durch den Laserstrahl auf dem Target erzeugt werden. Es versteht sich, dass in speziellen Fällen diese Kreise auch zu einem punktartigen Vollkreis verkleinert sein können.

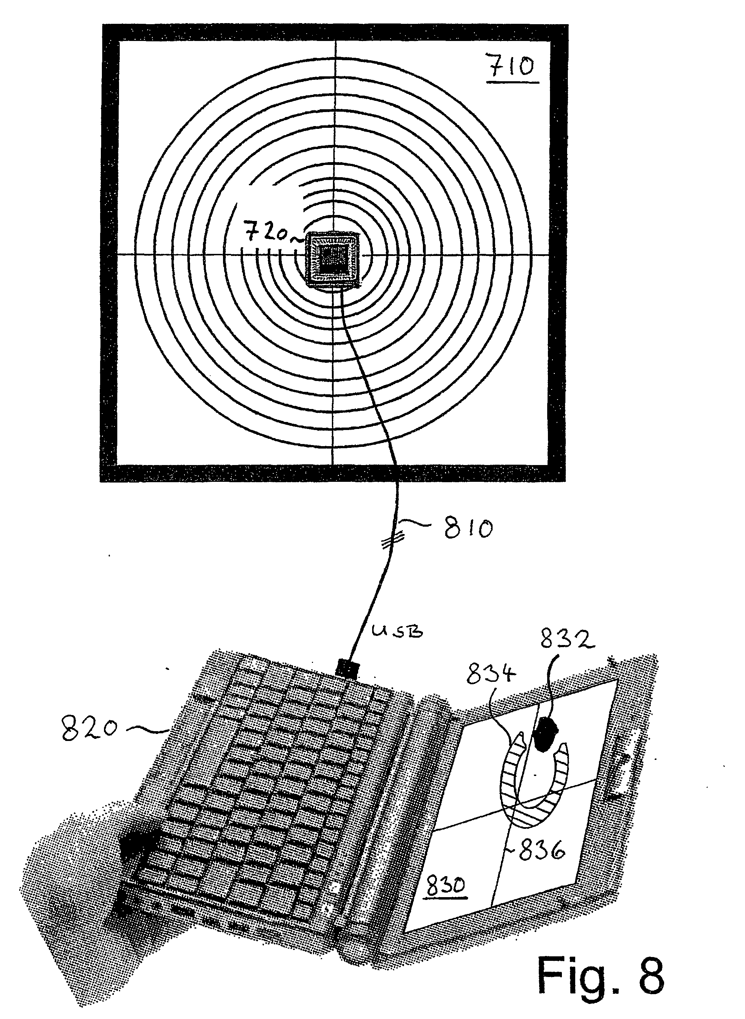

Fig. 8 zeigt die Verwendung der Erfindung im Zusammenspiel mit einem zweidimensional auslesbaren optoelektronischen Sensor 720, zum Beispiel einem CMOS-Sensor vom Typ HDCS 2000. Dieser befindet sich im Zentrum des Targets 710, so dass seine effektiv beleuchtbare Fläche mit einer Diagonale von ca. 8 mm durch einen relativ gut zentrierten Laserstrahl beleuchtet werden kann. Bei Bedarf ist eine optische Aperturvergrösserung vor den Sensor 720 zu schalten. Diese kann aus einer grossflächigen rotgefärbten Mattscheibe von etwa 10 x 10 cm bestehen, sowie einer kurzbrennweitigen Sammellinse mit einer Brennweite von ca. 5 bis 15 mm. Diese Sammellinse wirkt für den Sensor im Sinne eines fotografischen Objektivs. Ein auf die Mattscheibe auftreffender Lichtfleck kann dann - in Transmission - auf die empfindliche Fläche des Sensors 720 projiziert werden. Die rotgefärbte Mattscheibe kann zweckmässigerweise mit einer Fresnel- oder Sammellinse kombiniert werden, um das genannte Projektionsverhalten zu verbessern.
Der Sensor 720 ist mit einer geeigneten, kommerziell erhältlichen Zusatzelektronik versehen, so dass er z.B. per seriellem USB-Signalkabel 810 in Verbindung mit einem tragbaren Computer 820 gebracht werden kann, wie dieser z.B. von der Fa. Sony kommerziell erhältlich ist. Auf dessen Display 830 kann der auf den Sensor 720 auftreffende Laserstrahl als Lichtfleck-Darstellung 832 wiedergegeben werden. Bei der Drehung des Messgerätes verändern sich die Positionen eines solchen dargestellten Lichtflecks. Diese Positionen können vom Computer zwischengespeichert und in Form eines Kreisbogens 834 dargestellt werden. Wie aus Fig. 8 erkennbar, ist das Target 710 erst dann auf die Achse des Hohlzylinders zentriert, wenn der Kreisbogen 834 bezüglich des Fadenkreuzes 836 zentrisch liegt. Die Bestimmung der genannten zentrischen bzw. exzentrischen Lage des Kreisbogens 834 kann durch die Software des Rechners 820 vorgenommen werden.

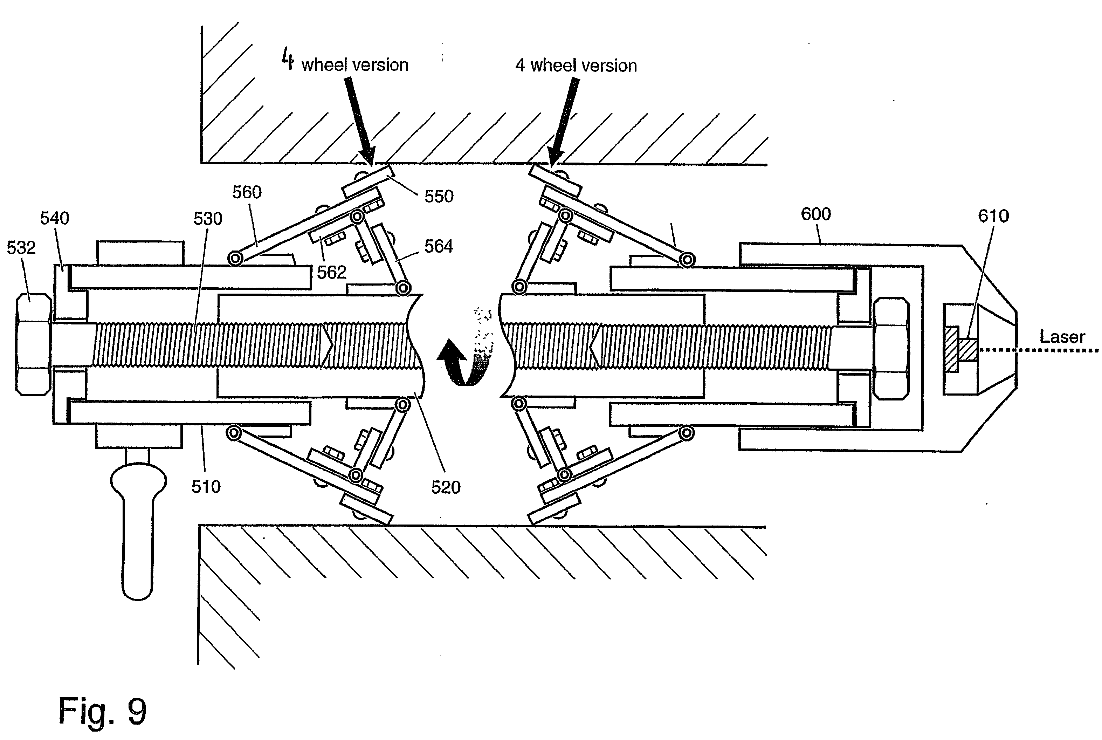

Fig. 9 zeigt in querschnittsmässiger Voll-Darstellung die in Fig. 5 und Fig. 6 erörterten Einzelteile. Aus Gründen der vereinfachten Zeichnung ist eine 4-Rad-Version der Spannvorrichtungen wiedergegeben. Wie im obenstehenden erläutert, kann bevorzugt eine jeweils 3-rädrige Konstruktion der Spannvorrichtungen vorgesehen werden.

## Patentansprüche

1. Vorrichtung zur Bestimmung der Achslage von Hohizylindern,
mit einem Laserkopf (600) zum Aussenden eines Laserstrahls in angenähert axialer Richtung eines zu vermessenden Hohlzylinders und
mit einer mit Rollen (550) versehenen drehbaren Spannvorrichtung zum Anlegen der Rollen (550) an den Innenmantel des Hohlzylinders und zur Drehung des Laserkopfes (600) innerhalb des Hohlzylinders,
wobei die Vorrichtung so eingerichtet ist, daß bei der Drehung die Rollen (550) auf dem Innenmantel des Hohlzylinders abrollen und der Laserstrahl auf einem außerhalb des Hohlzylinders angebrachten Target (710) kreisförmige Projektionsmuster erzeugt, die in ihrem Zentrum einen Punkt auf der Hohlzylinderachse definieren.

2. Vorrichtung nach Anspruch 1, **dadurch gekennzeichnet, dass** der effektive Durchmesser der drehbaren Spannvorrichtung an den Durchmesser des Hohlzylinders angepasst werden kann.

3. Vorrichtung nach einem der vorhergehenden Anspüche, **dadurch gekennzeichnet, dass** die drehbare Spannvorrichtung mit zentrisch angeordneten Spannschrauben (530) versehen ist und manuell oder motorisch in Drehung versetzt werden kann

4. Kombination einer Vorrichtung nach einem der vorhergehenden Ansprüche und einem Target (710) mit vorgedruckten konzentrischen Kreisen.

5. Kombination einer Vorrichtung nach einem der vorhergehenden Ansprüche und einem optoelektronischen, zweidimensional auslesbaren Target.

6. Kombination nach Anspruch 5, bei der das optoelektronische Target als pixelorientierter CMOS-Sensor (720) ausgestaltet ist.

7. Kombination nach Anspruch 6, weiterhin kombiniert mit einem tragbaren Computer (820), zur Darstellung einer auf dem Sensor (720) zu beobachtenden Leuchtfleck-Position und zur Errechnung eines Zentrizitätsmasses.

## Claims

1. Device for determining the axial position of hollow cylinders,
with a laser head (600) for emitting a laser beam in the approximately axial direction of a hollow cylinder to be measured and
with a rotatable clamping device, provided with rollers (550), for placing the rollers (550) against the inner lateral surface of the hollow cylinder and for rotating the laser head (600) within the hollow cylinder,
the device being set up in such a way that, during rotation, the rollers (550) roll on the inner lateral surface of the hollow cylinder and the laser beam produces, on a target (710) provided outside the hollow cylinder, projection patterns which define at their centre a point on the axis of the hollow cylinder.

2. Device according to Claim 1, **characterized in that** the effective diameter of the rotatable clamping device can be adapted to the diameter of the hollow cylinder.

3. Device according to one of the preceding claims, **characterized in that** the rotatable clamping device is provided with centrally arranged clamping screws (530) and can be set in rotation manually or by motor.

4. Combination of a device according to one of the preceding claims and a target (710) with preprinted concentric circles.

5. Combination of a device according to one of the preceding claims and an optoelectronic, two-dimensionally readable target.

6. Combination according to Claim 5, in which the optoelectronic target is designed as a pixel-oriented CMOS sensor (720).

7. Combination according to Claim 6, further combined with a portable computer (820) for displaying the position of a light spot which can be observed on the sensor (720) and for calculating a concentricity mass.

## Revendications

1. Dispositif pour déterminer la position de l'axe de cylindres creux,
comprenant une tête de laser (600) pour envoyer un faisceau laser dans la direction approximativement axiale d'un cylindre creux à mesurer et
comprenant un dispositif de serrage rotatif pourvu de rouleaux (550) pour appliquer les rouleaux (550) contre l'enveloppe interne du cylindre creux et pour faire tourner la tête de laser (600) à l'intérieur du cylindre creux,
le dispositif étant prévu de telle sorte que lors de la rotation, les rouleaux (550) roulent sur l'enveloppe interne du cylindre creux et le faisceau laser produit des modèles de projection circulaires sur une cible (710) disposée en dehors du cylindre creux, lesquels définissent en leur centre un point sur l'axe du cylindre creux.

2. Dispositif selon la revendication 1, **caractérisé en ce que** le diamètre efficace du dispositif de serrage rotatif peut être adapté au diamètre du cylindre creux.

3. Dispositif selon l'une quelconque des revendications précédentes, **caractérisé en ce que** le dispositif de serrage rotatif est pourvu de vis de serrage disposées centralement (530) et peut être entraîné en rotation manuellement ou par le biais d'un moteur.

4. Combinaison d'un dispositif selon l'une quelconque des revendications précédentes, et d'une cible (710) avec des cercles concentriques pré-imprimés.

5. Combinaison d'un dispositif selon l'une quelconque des revendications précédentes et d'une cible opto-électronique, lisible de manière bidimensionnelle.

6. Combinaison selon la revendication 5, dans laquelle la cible opto-électronique est configurée sous forme de capteur CMOS à pixels (720).

7. Combinaison selon la revendication 6, combinée en outre à un ordinateur portable (820) pour la représentation d'une position de point lumineux Leuchtfleck à observer sur le capteur (720) et pour le calcul d'une masse de centricité.
